# EUROPÄISCHE PATENTANMELDUNG

(11) **EP 2 305 565 A1**
(43) Veröffentlichungstag der Anmeldung: **06.04.2011**
(21) Anmeldenummer: 09405169.5
(22) Anmeldetag: 01.10.2009
(51) Int. Cl.: B65B 43/44, B65G 59/10

(54) **Stapeltrenner**

(71) Anmelder: Amax Automation AG, 3400 Burgdorf (CH)
(72) Erfinder: Lüdi, Thomas, 3415 Hasle b. Burgdorf (CH)
(74) Vertreter: Rüfenacht, Philipp Michael

(57) **Zusammenfassung**

Eine Vorrichtung zum Trennen von gestapelten Produkten (800) umfasst einen stromaufwärtigen Förderer (600) zum Fördern von gestapelten Produkten (800) in eine Förderrichtung, eine vom stromaufwärtigen Förderer (600) mit gestapelten Produkten (800) gespiesene Trenneinheit zum Trennen zweier benachbarter Produkte (800) der gestapelten Produkte (800) in Förderrichtung. Weiter umfasst die Vorrichtung eine Abführvorrichtung (700) zum Abführen der Produkte (800) von der Trenneinheit. Die Trenneinheit umfasst eine Düse (200) zur Erzeugung eines Gasstromes, wobei mittels des Gasstromes eine Lücke zwischen zwei benachbarten Produkten (800) erreichbar ist. Mittels eines Trennmessers (100) wird schliesslich die Lücke vergrössert.

## Beschreibung

### Technisches Gebiet

Die Erfindung betrifft eine Vorrichtung zum Trennen von gestapelten Produkten, umfassend einen stromaufwärtigen Förderer zum Fördern von gestapelten Produkten in eine Förderrichtung, eine vom stromaufwärtigen Förderer mit gestapelten Produkten gespiesene Trenneinheit zum Trennen zweier benachbarter Produkte der gestapelten Produkte in Förderrichtung und eine Abführvorrichtung zum Abführen der Produkte von der Trenneinheit.

### Stand der Technik

Die DE 91 10 252 U (Jazbinsek Anton) beschreibt eine Fördereinrichtung zum lagerichtigen Transport von gestapelten becherförmigen Kunststoffteilen. Die Fördereinrichtung umfasst zwei U-förmige und gegenüberliegende verzahnte Kämme, die bei jedem Maschinentakt zum Bechermittelpunkt verfahren werden und so einen Becherstapel bilden. Die Kämme heben die Becher an ihrem oberen Rand etwas an. Ein Trennen der Becherstapel erfolgt durch Luftdüsen, die unterhalb des Becherrandes am Umfang angeordnet sind und zwischen die Mantelflächen der ineinandergestapelten Becher blasen. Nachfolgende Becher werden durch Abstützbleche zurückgehalten.

Die DE 36 24 556 A1 (A.C.M.A. S.p.A.) bezieht sich auf einen Verteiler für Plastikbecher mit nach aussen weisenden Rändern, die als Stapel in einem Magazin angeordnet sind und von denen jeweils einer in ein Rohr einzubringen ist. Das Magazin ist über dem Rohr angeordnet und von diesem durch eine Trennstation zum Trennen der Stapel getrennt. Der Verteiler umfasst einen oberen Träger und einen unteren Träger, welche in Umfangsrichtung um die Becher angeordnet sind und welche voneinander eine kleinere Entfernung aufweisen, als zwei benachbarte Becher. Die Träger sind abwechselnd zwischen Arbeits- und Nicht-Arbeitsposition bewegbar, so dass der Stapel jeweils an einem Rand abgestützt ist. Der Verteiler umfasst weiter Blaseinrichtungen für komprimierte Luft zwischen den Trägern, welche in Tätigkeit sind, wenn der Stapel vom unteren Träger gestützt ist.

Die EP 1 471 007 (Ideacorp AG) beschreibt eine Separierungsvorrichtung, mit welcher in einem Stapel angeordnete Stapelgutelemente vereinzelt werden. Dazu weist die Vorrichtung eine Halteeinrichtung mit einem Andrückbereich auf, welcher quer zur Entnahmerichtung elastisch gegen den Stapel drückend ausgestaltet ist. Der Andrückbereich kann dabei als Zahnrad ausgebildet sein, welches in den als Zahnstange anzusehenden Stapel eingreift.

Die DE 1270492 B (Neff Werke GmbH) beschreibt eine Entstapelungseinrichtung für Schalen oder Becher, wobei ausführende Mitnehmer zwischen seitliche Randteile der aufgestapelten Schalen tangential eingreifen und diese unter Freigabe beweglich angeordneter Anschläge auswerfen.

Die aus dem Stand der Technik bekannten Vorrichtungen zum Trennen von Stapeln weisen alle den Nachteil auf, dass insbesondere bei druckempfindlichen Produkten die Gefahr besteht, dass sie beim Ergreifen, respektive Trennen gequetscht und damit beschädigt werden können.

Würde nämlich mit einem Werkzeug versucht, die Produkte zu trennen, müsste dieses eine sehr scharfe Kante aufweisen, unter Umständen im Submillimeterbereich positionierbar ausgebildet sein und trotzdem eine genügend hohe Arbeitsfrequenz aufweisen. Typischerweise sind die Produkte aber nicht derart exakt positioniert, wodurch die Positionierung des Werkzeuges erschwert wird.

Die Ausbildung einer scharfen Kante bildet sowohl für das Produkt als auch für das mit der Vorrichtung betraute Personal eine erhebliche Verletzungsgefahr. Scharfe Kanten tendieren zudem zum Abstumpfen, womit auch die Wartung der Anlage aufwändiger ist.

Weiter ist eine exakte Positionierung eines festen Werkzeuges im Submillimeterbereich sehr aufwändig, teuer und technisch schwierig zu realisieren. Die Wartung einer solchen Positionierung kann sehr arbeitsaufwendig sein, insbesondere weil eine solche Positionierung typischerweise regelmässig justiert werden muss.

Schliesslich ist eine Verletzung von druckempfindlichen Produkten beim Versuch, zwei sich kontaktierende Produkte zu trennen, kaum zu verhindern, da ein Werkzeug, welches versucht, zwischen die Produkte einzudringen, mindestens eines der Produkte mit einer Kraft, typischerweise in einem kleinen Kontaktbereich, beaufschlagt und dadurch einen hohen Druck erzeugt, wodurch das Produkt beschädigt werden kann.

### Darstellung der Erfindung

Aufgabe der Erfindung ist es, eine dem eingangs genannten technischen Gebiet zugehörende Vorrichtung zu schaffen, welche ein schonendes Trennen von gestapelten Produkten erlaubt, sowie konstruktiv einfach, kompakt und kostengünstig aufgebaut ist.

Die Lösung der Aufgabe ist durch die Merkmale des Anspruchs 1 definiert. Gemäss der Erfindung umfasst die Trenneinheit eine Düse zur Erzeugung eines Gasstromes, wobei mittels des Gasstromes eine Lücke zwischen zwei benachbarten Produkten erreichbar ist, und ein Trennmesser zum Vergrössern der Lücke.

Erfindungsgemäss werden zwei benachbarte Produkte vor dem eigentlichen Trennen mittels eines Gasstromes so beabstandet, dass sich zwischen den zu trennenden Produkten eine Lücke ergibt, ohne dabei die Produkte in radialer Richtung mit einem festen Werkzeug beanspruchen zu müssen. Damit können zwischen empfindlichen, insbesondere druckempfindlichen Produkten schonend Lücken erreicht werden.

Ein Verfahren zum Trennen von gestapelten Produkten, insbesondere von gestapelten Behältern, umfasst die folgenden Schritte:
a) Zuführen von gestapelten Produkten mittels eines stromaufwärtigen Förderers in Förderrichtung zu einer Trenneinrichtung.
b) Positionieren eines Trennmessers im Bereich zweier benachbarter Produkte.
c) Ausbildung einer Lücke zwischen den benachbarten Produkten mittels eines Gasstroms, insbesondere eines über das Trennmesser geleiteten Gasstroms.
d) Einführen des Trennmessers in die Lücke zwischen den zwei benachbarten Produkten.
e) Vergrössern der Lücke mittels des Trennmessers.
f) Übergabe der getrennten Produkte an eine Abführvorrichtung.

Eine Breite der mittels des Gasstromes erreichten Lücke kann relativ klein bemessen sein. Die Breite der Lücke ist vorzugsweise so zu wählen, dass das Trennmesser in die Lücke eingefahren werden kann, ohne dabei die Produkte zu beschädigen. Dabei soll die Breite der Lücke vorzugsweise grösser als eine Dicke des Trennmessers gewählt sein, um Positionierungstoleranzen des Trennmessers problemlos bewältigen zu können. Zur Steuerung der Breite der Lücke wird bevorzugt der Druck, die Strömungsart und der Volumendurchsatz des Gasstroms variiert. Die Grösse der gebildeten Lücke ist dabei im Wesentlichen nach unten zu beschränken, so dass das Trennmesser, ohne ein Produkt zu beschädigen eingefahren werden kann. Die gebildete Lücke zwischen den zu trennenden Produkten liegt vorzugsweise zwischen 0.5 und 2 cm, insbesondere etwa 1 cm. Sie kann je nach Produkt und Trennmesser auch kleiner oder grösser gewählt sein. Das Trennmesser vergrössert alsdann die Lücke und führt die getrennten Produkte bevorzugt weiter zur Abführvorrichtung, welche den weiteren Transport übernimmt.

Bei den zu trennenden Produkten handelt es sich typischerweise um stapelbare Produkte, wie zum Beispiel ineinander geschobene Behälter, insbesondere Becher oder Kapseln.

Insbesondere bei ineinander geschobenen Behältern ist es von Vorteil, wenn die Produkte im Bereich der Trennvorrichtung über eine Welle oder eine Rampe geschoben werden, das heisst, die Produktauflage weist dort eine Wellenform oder eine Rampenform auf. Damit kann schon vor der Bildung der eigentlichen Lücke mittels des Gasstromes ein Auseinanderspreizen im Bereich des oberen Kammes der Produktstangen erreicht werden, womit dem Gasstrom eine bessere Angriffsfläche geboten wird, um die Lücke zu bilden.

Natürlich können auch andere stapelbare Produkte durch die erfindungsgemässe Vorrichtung getrennt werden, wobei der Gasstrom und die Dimensionierung des Trennmessers den Produkten angepasst werden. Zum Beispiel wird bei schwereren Produkten der Gasstrom verstärkt, bei leichteren Produkten wiederum kann ein relativ schwacher Gasstrom ausreichen.

Der stromaufwärtige Förderer fördert die Produkte in eine Förderrichtung. Zum Beispiel können die Produkte nach deren Herstellung gestapelt werden, wobei ein Vorschub des Stapels durch ein Anfügen eines weiteren Produktes an einem Ende des Stapels erfolgt. In diesem Fall gleiten die Produkte durch den erhaltenen Vorschub durch das Einbringen eines weiteren Produktes gewissermassen pulsierend in Förderrichtung. Weiter können auch ein Förderband oder andere dem Fachmann bekannte Fördermittel vorgesehen sein.

Die Produkte werden bevorzugt mittels des stromaufwärtigen Förderers in einer ersten Anzahl paralleler Bahnen gefördert und die Trennung der Produktbahnen erfolgt zeitgleich. Dadurch wird ein besonders effizientes Verfahren erreicht.

Alternativ kann mit dem Verfahren auch bei einer einzelnen Produktbahn eine Trennung der Produkte durchgeführt werden.

Vorzugsweise sind die Düse und das Trennmesser relativ zueinander fix angeordnet. Damit wird eine besonders einfache Konstruktion erreicht, da die Düse und das Trennmesser zusammen verfahren werden können und damit weniger bewegte Teile eingesetzt werden müssen. Weiter kann damit erreicht werden, dass ein Gasstrom aus der Düse über das Trennmesser zielgenau gerichtet werden kann. Das Trennmesser übernimmt dabei die Funktion eines "Leitbleches" für den Gasstrom. Dies ermöglicht eine Trennung zwischen vorbestimmten Produkten, auch wenn eine Vielzahl von Produkten pro Streckeneinheit vom stromaufwärtigen Förderer zur Trenneinheit gefördert werden.

Alternativ können die Düse und das Trennmesser auch separat geführt sein. Dies hat aber den Nachteil, dass mehr bewegte Teile vorgesehen sein müssen, womit sich der konstruktive Aufwand und die Herstellungskosten der Vorrichtung erhöhen. Durch den erhöhten konstruktiven Aufwand kann sich auch der Wartungsaufwand erhöhen, was sich wiederum auf die langfristigen Kosten niederschlägt.

Das Trennmesser ist bevorzugt im Wesentlichen aus Polyoxymethylen (POM) gebildet. Das Trennmesser kann auch aus anderen Kunststoffen, aus Metall, insbesondere aus Stahl oder Legierungen, gebildet sein. Das Material kann in Abhängigkeit der Anwendung gewählt werden und zum Beispiel auch aus weichen Stoffen, wie zum Beispiel Gummi, bestehen, um die Produkte besonders schonend bewegen zu können.

Die Düse ist bevorzugt aus einer Aluminiumlegierung gebildet. Die Düse kann aber auch aus sonstigen Metallen gebildet werden, so zum Beispiel aus Stahl oder aber auch aus einem festen Kunststoff.

Sowohl bei der Wahl des Materials für das Trennmesser wie auch für die Düse wird bevorzugt ein einfach zu bearbeitendes und widerstandfähiges sowie kostengünstiges Material verwendet.

Bevorzugt umfasst das Trennmesser mehrere Düsen, welche in einer Reihe rechtwinklig zur Förderrichtung angeordnet sind. Dadurch können mehrere parallel durch den stromaufwärtigen Förderer geförderte Produktreihen zeitgleich getrennt werden, womit ein höherer Durchsatz und damit ein ökonomischeres Verfahren erreicht wird.

Je nach Anwendung kann es aber auch sinnvoll sein, genau eine Düse zu verwenden. Zum Beispiel könnte eine Greifvorrichtung mit einer Trenneinheit verbunden sein, welche vor dem Ergreifen von Produkten eine Trennung zwischen zwei benachbarten Produkten vornimmt.

Vorzugsweise sind die mehreren Düsen einstückig ausgebildet. Damit werden die Montage und die Justierung der Düsen wesentlich vereinfacht, da mehrere zusammen montiert und damit auch zusammen eingestellt, respektive während des Betriebs justiert werden können.

Alternativ können die Düsen auch als einzelne Einheiten ausgebildet sein, womit zum Beispiel strömungsbedingte Störungen unter den nebeneinander angeordneten Düsen besser gehandhabt werden können.

Bevorzugt ist das Trennmesser im Wesentlichen als gerades Prisma mit einem trapezförmigen Querschnitt, insbesondere einem trapezförmigen Querschnitt mit zwei rechten Winkeln, sowie einem spitzen Winkel und einem stumpfen Winkel ausgebildet, wobei eine Arbeitskante des Trennmessers durch den spitzen Winkel gebildet ist und wobei zwischen dem spitzen Winkel und dem stumpfen Winkel eine Flanke ausgebildet ist. Damit wird ein stabiles und einfach zu montierendes Trennmesser geschaffen, da für eine Herstellung zum Beispiel ein quaderförmiges Werkstück lediglich schräg abgefräst werden muss.

Alternativ kann der Querschnitt des Trennmessers auch dreieckig oder beliebig polygonal ausgebildet sein. Weiter ist auch eine blattförmige Ausbildung des Bereiches der Arbeitskante des Trennmessers denkbar. Insbesondere kann das Trennmesser auch im Wesentlichen die Form einer Rakel, bekannt aus der Drucktechnik und Papierverarbeitung, aufweisen.

Die Düse ist vorzugsweise an einer Flanke des Trennmessers angeordnet. Damit kann der Gasstrom in unmittelbarer Nähe des Trennmessers erzeugt werden, womit ein gezielter Gasstrom in Richtung der zu trennenden Produkte erreichbar ist. Die Düse weist bevorzugt einen grösseren Abstand zur Arbeitskante auf als eine Eindringtiefe des Trennmessers zwischen die zu trennenden Produkte.

Die Düse kann alternativ auch auf der bezüglich der Flanke gegenüberliegenden Seite angeordnet sein. Die Düse kann weiter als Rohr mit einem düsenförmig ausgebildeten Austritt realisiert sein. Damit kann durch Biegung des Rohrs auch nach vollendeter Montage noch die Richtung des Gasstromes justiert werden, wobei allerdings darauf zu achten ist, dass durch Volumenänderungen an den Biegestellen die Strömung des Gases nicht negativ beeinflusst wird.

Bevorzugt ist die Flanke des Trennmessers durch die Arbeitskante und eine stumpfwinklige Kante begrenzt. Aufgrund des im Wesentlichen trapezförmigen Querschnitts des Trennmessers ergibt sich ein spitzer Winkel im Bereich der Arbeitskante, respektive der Schneide des Trennmessers. Eine erste an die Arbeitskante der Flanke angrenzende Fläche schliesst mit der Flanke einen Winkel von ca. 45° ein und verläuft parallel zu einer zweiten an die Flanke angrenzenden Fläche, wobei die zweite Fläche mit der Flanke entsprechend einen Winkel von ca. 135° einschliesst. Die Düse ist nun bezüglich der Förderrichtung so ausgerichtet, dass die Produkte durch den Gasstrom in Förderrichtung bewegt werden, um eine optimale Trennung der Produkte unter geringem Volumenstromaufwand des Gasstromes zu erreichen. Das Trennmesser ist im Betrieb vorzugsweise so angeordnet, dass die Flanke des Trennmessers ungefähr rechtwinklig zur Förderrichtung orientiert ist.

Natürlich würde eine Trennung auch erreicht werden können, wenn die Düsen in bezüglich der Förderrichtung entgegen gesetzter Richtung ausgerichtet wären. Dabei würde durch den Gasstrom eine Kraft entgegen der Förderrichtung wirken. Dies kann insbesondere dann von Interesse sein, wenn zugleich zum Trennen auch ein Zusammenschieben der vom stromaufwärtigen Förderer geförderten Produkte erreicht werden soll. Dies hätte den Vorteil, dass eine Länge bezüglich der Anzahl Produkte besser korreliert und damit bezüglich der Anzahl Produkte besser reproduzierbare Produktstangen erreicht werden können. Dazu wäre aber ein grösserer Volumenstrom des Gases erforderlich. Um die Reproduzierbarkeit der Anzahl getrennter Produkte bei einem Trennvorgang zu verbessern, kann der stromaufwärtigen Förderer die Produkte entgegen einer Steigung fördern, womit die Produkte mittels der Schwerkraft zusammengeschoben werden (siehe unten).

Vorzugsweise beträgt der spitze Winkel des Trennmessers zwischen 30° und 60°, insbesondere 45°. Die Arbeitskante weist vorzugsweise eine Dicke kleiner als 1 mm auf, vorzugsweise ungefähr 0.4 mm. Die Arbeitskante ist vorzugsweise nicht scharf geschliffen, da einerseits ein Verletzungsrisiko für Bedienpersonen und Wartungspersonal besteht und anderseits die Produkte beschädigt werden können.

Vorzugsweise ist die Düse über einen Kanal im Trennmesser mit Gas versorgbar, wobei der Kanal aus der Flanke des Trennmessers durch eine Austrittsöffnung austritt. Dazu weist der Kanal im Innern des Trennmessers bevorzugt einen rechten Winkel auf, so dass ein Gasanschluss bei der an die Flanke angrenzenden zweiten Teilfläche vorliegt. Damit wird eine besonders kompakte Konstruktion der Trennvorrichtung erreicht, da durch die Gasanschlüsse der Bereich der Arbeitskante nicht gestört wird. Weiter wird dadurch erreicht, dass Gaszufuhrleitungen weniger Krümmungen aufweisen müssen und kürzer gehalten werden können, womit eine kompaktere und stabilere Bauweise erreicht wird.

Alternativ kann die Gaszufuhr auch als externe Schläuche direkt zur Düse erfolgen, womit aber die obig genannten Vorteile unter Umständen nicht erreicht werden können. Vorzugsweise ist der Kanal kreiszylindrisch ausgebildet, so dass die Kanäle zum Beispiel durch Bohrungen realisiert werden können. Um weiter eine einfache Bauweise zu erhalten, treten die Öffnungen elliptisch aus der Flanke des Trennmessers aus. Dies ist durch die Ausbildung einer Bohrung, welche nicht rechtwinklig zur Flanke orientiert ist, gegeben.

Alternativ kann auch unter konstruktiv erhöhtem Aufwand eine kreisrunde Öffnung in der Flanke des Trennmessers erreicht werden. Um dabei aber mit zwei (geradlinigen) Bohrungen auszukommen, müsste die zweite Bohrung an der Rückseite des Trennmessers erfolgen. Dies hätte den Nachteil, dass die Gasanschlüsse in verbautem Zustand weniger gut abgegriffen werden könnten. So müsste auch zum Beispiel das Trennmesser an einer Unterseite oder an einer Oberseite an einer weiteren Einrichtung montiert werden.

Vorzugsweise weist der Kanal einen Durchmesser zwischen 1 mm und 8 mm, insbesondere ca. 4 mm auf. Dies ist jedoch anwendungsspezifisch und kann den gegebenen Produkten angepasst werden. Dem Fachmann ist hinreichend klar, wie eine Düsendimension einem Produkt angepasst werden muss, so dass bei optimaler Trennung der Produkte ein Volumenstrom und ein Druck minimal gehalten werden können.

Bevorzugt weist die Düse eine erste Hauptfläche auf, die die Flanke des Trennmessers kontaktiert, wobei die erste Hauptfläche eine Ausnehmung aufweist, welche in Richtung der Arbeitskante offen ist und so zusammen mit dem Trennmesser einen Düsenaustritt bildet, und wobei die Austrittsöffnung des Kanals in Kommunikation mit der Ausnehmung steht. Durch die Ausbildung des Düsenaustritts als Zwischenraum zwischen der Düse und dem Trennmesser kann in konstruktiv einfacher Weise eine sehr exakte Düsenaustrittsform erreicht werden, insbesondere, da eine schmale Öffnung typischerweise nur unter erheblichem Aufwand in einem Werkstück erreicht werden kann. Durch diese Konstruktion kann die Ausnehmung nämlich einfach durch eine flächige Abtragung, insbesondere durch einen Fräsvorgang erreicht, werden.

Vorzugsweise umrandet die Ausnehmung die Austrittsöffnung teilweise bündig. Durch eine weitgehende Vermeidung von scharfkantigen Umbrüchen können Turbulenzen im Gasstrom vermindert werden, womit dieser optimal ausgerichtet werden kann. Vorzugsweise weist die Ausnehmung eine Tiefe zwischen 0.2 mm und 0.6 mm, insbesondere ca. 0.4 mm auf. Die Ausnehmung weist vorzugsweise eine Breite zwischen 3 mm und 6 mm, insbesondere ca. 4.5 mm auf. Diese Dimensionen sind auch anwendungsspezifisch und können den gegebenen Produkten angepasst werden. Dem Fachmann ist hinreichend klar, wie eine Düsendimension einem Produkt angepasst werden muss.

Vorzugsweise weist der Düsenaustritt eine Tiefe auf, welche einer Tiefe der Ausnehmung entspricht und eine Breite, welche einer Breite der Ausnehmung der Düse entspricht. Auch damit wird ein Gasstrom mit möglichst geringem turbulenten Anteil angestrebt.

Bevorzugt weist die Düse im Bereich der Düsenausnehmung eine Formung auf, welche Turbulenzen respektive gegenseitigen Beeinflussungen der aus den Düsen ausströmenden Gase entgegenwirkt. Damit kann eine präzisere Ausrichtung des Gasstromes in Richtung der zu trennenden Produkte erreicht werden. Zum Beispiel kann die Düse selbst entsprechend ausgeformt sein oder es können Aufsätze vorgesehen sein, welche im Bereich des Gasaustrittes der Düse, insbesondere auf der gegenüberliegenden Seite der Düsenausnehmung, mit der Düse verbunden sein können. Dies hat den Vorteil, dass zum Beispiel je nach Volumenstrom des Gases der Aufsatz angepasst, insbesondere ausgetauscht werden kann.

Bevorzugt weist die Düse eine zweite Hauptfläche auf, welche parallel zur ersten Hauptfläche orientiert ist, wobei die Düse auf der zweiten Hauptfläche eine keilförmige Ausnehmung aufweist, welche im Düsenaustritt mündet und so eine Düsenkante bildet. Aus der Strömungslehre ist bekannt, dass sich Verwirbelungen bei kantigen Übergängen bilden können. Mit dieser Konstruktion der Düse werden diese Verwirbelungen zwar nicht verhindert, aber ermöglicht, dass sie dem Hauptgasstrom ausweichen können und diesen nicht übermässig ablenken.

Die Düse könnte alternativ auch gesamthaft keilförmig ausgebildet sein, so dass auf die Ausnehmungen verzichtet werden kann. Dies hätte den Nachteil, dass sich Gasströme benachbarter Düsen beeinflussen können. Die zweite Hauptfläche muss also nicht parallel zur ersten Hauptfläche orientiert sein.

Vorzugsweise weist die keilförmige Ausnehmung im Bereich der Düsenkante eine Breite auf, welche einer Breite der Ausnehmung der Düse entspricht. Mittels Experimenten hat sich gezeigt, dass so ein optimaler Gasstrom erzeugbar ist.

Alternativ kann die Breite der keilförmigen Ausnehmung auch anders gewählt werden.

Vorzugsweise verbreitert sich die Breite der keilförmigen Ausnehmung hin zur zweiten Hauptfläche der Düse und bildet so einen gleichschenkligen trapezförmigen Ausschnitt in der zweiten Hauptfläche, welcher insbesondere zwei 45°-Winkel aufweist und wobei ein Übergang zwischen der Düsenkante und dem trapezförmigen Ausschnitt der zweiten Hauptfläche halbkreisförmig ausgebildet ist.

Bevorzugt wird die Düse mit atmosphärischer Luft oder Stickstoff als Gas gespiesen. Die Verwendung von Luft hat den Vorteil, dass lediglich ein Kompressor zur Verfügung stehen muss. Falls die Produkte korrosionsanfällig sind, kann die Luft vorgängig getrocknet werden. Falls besondere Reinhaltebedürfnisse bestehen respektive, falls eine hauseigene Installation zur Verfügung steht, kann auch Stickstoff verwendet werden.

Alternativ können auch andere Gase oder sogar Flüssigkeiten und Dampf verwendet werden. Flüssigkeiten hätten den Vorteil, dass eine wesentlich höhere Kraft erreichbar ist, womit schwerere Produkte gehandhabt werden könnten. Beim Einsatz von Dampf könnte gleichzeitig eine Sterilisation der Produkte erreicht werden.

Die Trennvorrichtung umfasst bevorzugt eine erste Führung, mit welcher das Messer in Förderrichtung, im Wesentlichen parallel zu einer Längsachse des Produktes verfahrbar ist. Nachdem die Lücke mittels des mit der Düse gebildeten Gasstromes erreicht worden ist, kann das Messer in der Lücke in Förderrichtung verfahren werden, um die Lücke zwischen den Produkten zu vergrössern. Falls die durch den Gasstrom erzeugte Lücke genügend gross ist, kontaktiert das Trennmesser erst beim Verfahren des Messers mittels der Führung das Produkt und verfährt es in Förderrichtung. Je nach Ausbildung der Führung können damit auch relativ grosse Distanzen zurückgelegt werden. Bevorzugt ist aber die Länge der Führung in Förderrichtung so beschaffen, dass sie das Produkt nach kurzem Weg einer Abführvorrichtung übergeben kann, welche der Trennvorrichtung nachgeschaltet ist. Die Länge der Führung wird so gewählt, dass sie bei angestrebter Fördergeschwindigkeit und Frequenz, mit welcher die Produkte durch den stromaufwärtigen Förderer angeliefert werden, dieselben verfahren kann, ohne einen Rückstau zu verursachen.

Alternativ kann das Trennmesser auch fix angeordnet sein, wobei die Vergrösserung der Lücke mittels eines Förderbandes durchgeführt wird. Dabei würde das Trennmesser in die Lücke eingefahren und eines der benachbarten Produkte zurückhalten, während die anderen durch das Förderband weggeführt werden. Dies hätte den Nachteil, dass die Produkte bei Zurückhalten durch das Trennmesser einer axialen Kraft ausgesetzt werden könnten.

Die erste Führung ist bevorzugt als Linearführung ausgebildet und insbesondere pneumatisch betreibbar. Typischerweise sind pneumatisch betreibbare Linearführungen für begrenzte Bewegungen, welche beidseitig einen mechanischen Anschlag aufweisen, besonders geeignet. Damit wird eine konstruktiv einfache und kostengünstige Bauweise der Linearführung erreicht. Mittels der Pneumatik können schnelle und einfach zu wartende Linearführungen erreicht werden. Die Führung muss nicht zwangsläufig linear erfolgen. Je nach Förderbahn kann die Führung auch als zwangsgesteuerte Kurvenführung ausgebildet sein. Ansonsten ist es konstruktiv einfacher, eine Linearführung zu verwenden und allfällig notwendige Umlenkungen zuvor oder danach durchzuführen. Alternativ kann die Führung auch einen Schrittmotor umfassen. Dies ist insbesondere dann von Vorteil, wenn präzise Bewegungsabläufe realisiert werden müssen, insbesondere, wenn zum Beispiel das Trennmesser in Abhängigkeit einer Lage der Produkte positioniert werden muss. Nachteilig daran sind der erhöhte konstruktive Aufwand und die Kosten.

Die Trennvorrichtung umfasst bevorzugt eine zweite Führung, mit welchem das Trennmesser zu den Produkten, respektive von den Produkten weg verfahrbar ist. Um mit dem Trennmesser in die Lücke zwischen den beiden zu trennenden Produkten einfahren zu können, weist die Trennvorrichtung eine Führung auf, mit welcher das Trennmesser verbunden ist. Bevorzugt erfolgt die Einführung des Trennmessers in die Lücke parallel zu einer an die Arbeitskante und die Flanke des Trennmessers angrenzenden Fläche. Bei genügend grosser Lücke berührt das Messer die Produkte bevorzugt noch nicht. Damit kann eine radiale Beanspruchung der Produkte durch das Trennmesser verhindert werden. Vorzugsweise ist die zweite Führung auch pneumatisch betreibbar, um dadurch eine einfache und kostengünstige Konstruktion zu erhalten. Aber auch der Einsatz eines Schrittmotors oder eines anderen Antriebsmittels ist denkbar.

Die zweite Führung kann alternativ so ausgebildet sein, dass das Messer rechtwinklig zur Förderrichtung in die Lücke einfahrbar ist. Auch eine seitliche Einführung des Trennmessers wäre grundsätzlich denkbar. Dazu müsste das Trennmesser mit der zweiten Führung aber einen grösseren Weg zurücklegen, womit eine Frequenz für den Trennvorgang verringert würde. Weiter wäre eine parallele Bearbeitung von mehreren Bahnen von Produkten erschwert, da das Trennmesser die gesamte Breite der Bahnen durchqueren müsste.

Alternativ können auch die Produkte in den Bereich der Trennmesser bewegt werden. Dies ist aber konstruktiv aufwändiger.

Vorzugsweise ist der Gasstrom während einer Zeitspanne aktiv und das Trennmesser wird innerhalb der Zeitspanne zwischen die benachbarten Produkte eingeführt. Insbesondere wenn der stromaufwärtige Förderer entgegen einer Steigung fördert, kann es von Vorteil sein, wenn die Einführung des Trennmessers erfolgt, währenddem der Gasstrom aktiv ist. Ansonsten könnten die durch den Gasstrom getrennten Produkte durch deren Schwerkraft vor dem Eindringen des Trennmessers wieder zusammenrutschen und so die Lücke wieder schliessen. Aber auch abgesehen von dieser Gefahr kann es von Vorteil sein, das Trennmesser während der aktiven Zeitspanne des Gasstromes in die Lücke einzuführen, da damit zwei Verfahrensschritte zeitgleich durchgeführt werden können, womit ein besonders effizientes Verfahren geschaffen wird.

Vorzugsweise umfasst der stromaufwärtige Förderer Halteeinrichtungen, welche die Produkte in axialer Richtung fixieren. Dies ist insbesondere dann von Vorteil, wenn die Produkte nicht auf einer beweglichen Unterlage transportiert, sondern über eine fixe Unterlage geschoben werden. Die Produkte können nämlich dadurch gefördert werden, dass jeweils ein weiteres Produkt am einen Ende einer Produktestange eingeführt und dadurch die Produktstange vorgerückt wird. Mittels der Haltevorrichtungen können so die Produkte zwangsgeführt werden. Dies wird insbesondere durch seitliche Haltevorrichtungen erreicht, welche als Leitgestänge oder Leitbleche ausgebildet sein können.

Falls als stromaufwärtiger Förderer ein Förderband oder ein ähnliches Fördermittel eingesetzt wird, welches eine verfahrbare Unterlage aufweist, kann auf die Halteeinrichtung auch verzichtet werden, insbesondere auch dann, wenn zwischen den Produkten und deren Auflage eine genügend grosse Reibungskraft vorliegt, welche die beim Transport auftretenden Querkräfte übersteigt.

Bevorzugt weist eine Produktauflage des stromaufwärtigen Förderers im Bereich der Trennvorrichtung eine Wellenform oder einen Absatz auf. Insbesondere bei ineinander gestapelten Produkten ergibt sich dadurch der Vorteil, dass die Produkte bei der Förderung über die Welle oder den Absatz an einem oberen Kamm gespreizt werden, womit dem Gasstrom eine grössere Angriffsfläche geboten wird. Weiter kann dadurch eine erste Haftreibung zwischen den Produkten überwunden werden, womit die Produkte durch den Gasstrom einfacher getrennt werden können. Dies ist auch dann von Vorteil, wenn die Produkte ineinander verkantet sind.

Alternativ kann auf die Wellenform oder den Absatz auch verzichtet werden, insbesondere, wenn dem Gasstrom schon eine genügend grosse Angriffsfläche geboten wird. Dies kann zum Beispiel dann der Fall sein, wenn es sich bei den Produkten um Becher mit abgerundetem Rand handelt, respektive wenn die Produkte lose ineinander gestapelt sind.

Bevorzugt werden die Produkte mittels des stromaufwärtigen Förderers entgegen einer Steigung aufwärts gefördert. Vorzugsweise schliesst der stromaufwärtige Förderer mit einer Horizontalen einen Winkel α ein, so dass die durch den stromaufwärtigen Förderer geförderten Produkte durch die Schwerkraft mit einer der Förderrichtung entgegen gesetzten Rückstellkraft beaufschlagt sind, wobei die Rückstellkraft eine Reibungskraft zwischen Produkten und einer Produktauflage übersteigt. Damit wird erreicht, dass insbesondere stapelbare Produkte während der Förderung durch den stromaufwärtigen Förderer zusammengestossen bleiben.

Typischerweise erfolgt die Trennung der Produkte zeitlich getaktet. Falls nun die Produkte nicht gleichmässig gestapelt sind, sondern untereinander variable Abstände aufweisen, kann die Trennung kaum reproduzierbar, das heisst, nicht nach jeweils derselben Anzahl Produkte erfolgen. Um dies zu verhindern, werden die Produkte durch den stromaufwärtigen Förderer entgegen einer Rampe hinaufgefördert. Die Steilheit der Rampe ist dabei abhängig von den zu fördernden Produkten und der Produktauflage. Je höher die Reibung µ zwischen den Produkten und der Produktauflage, desto grösser muss auch der Winkel α gewählt werden. Der Winkel α ist dabei typischerweise nicht zu gross zu wählen, da sonst eine zu grosse Energie für die Förderung und die Trennung der Produkte aufgewendet werden muss. Falls aber die Produkte wenig Gewicht aufweisen (zum Beispiel dünnwandige Trinkbecher, Schalen oder ähnliches) kann der stromaufwärtige Förderer in einem Extremfall auch senkrecht orientiert sein. Dabei wird eine Führung der Produkte vorzugsweise so ausgebildet, dass ein Verkanten der Produkte in der Führung vermieden werden kann. Dies kann zum Beispiel mit einer entsprechenden Oberflächenbeschichtung der Führung erreicht werden.

Alternativ kann natürlich die Steigung der Rampe je Produkt auch kleiner gehalten werden, insbesondere wenn die Produkte pulsartig gefördert werden. Dabei werden nämlich die Produkte durch deren Trägheit zusammengestossen. Zudem kann bei schwereren und damit trägeren Produkten auf die Rampe gänzlich verzichtet werden.

Die Abführvorrichtung umfasst bevorzugt ein bewegliches Profil, womit getrennte Produkte erfassbar und verfahrbar sind. Nachdem die Produkte durch das Trennmesser getrennt worden sind, werden diese zum Beispiel zwecks einer Weiterverarbeitung, oder Verpackung weiter gefördert. Das bewegliche Profil greift dabei zwischen die beiden getrennten Produkte ein und schiebt das eine in Förderrichtung weg. Das bewegliche Profil kann grundsätzlich auf verschiedene Arten realisiert sein (siehe unten). Das Profil kann von unten oder, wie das Trennmesser von oben in die Lücke eingreifen und entlang eines Förderweges verfahren werden.

Alternativ kann die Abführvorrichtung auch durch eine Rampe ausgebildet sein, wobei die Produkte aufgrund der Schwerkraft hinunterrutschen. Dies hat den Nachteil, dass ineinandergeschobene Produktestangen auseinanderfallen können, das heisst, dass sich die Produkte im schlimmsten Fall vereinzeln können. Dem kann mit einem Anschlag abgeholfen werden, welcher zum Beispiel aktivierbar und deaktivierbar ausgebildet sein kann. Weiter kann auch eine Greifvorrichtung vorgesehen sein, welche die Produkte nach deren Trennung ergreift und einer Weiterverarbeitungsvorrichtung oder einer Verpackungsvorrichtung zuführt.

Das Profil ist vorzugsweise um eine Achse verschwenkbar und/oder verfahrbar ausgebildet.

Wie vorstehend erwähnt, ist der stromaufwärtige Förderer vorzugsweise als schiefe Ebene ausgebildet, damit stapelbare Produkte während des Trennvorgangs zusammengeschoben bleiben und reproduzierbar in eine vorbestimmte Anzahl Produkte aufweisende Produktstangen getrennt werden können. Nach der Trennung erfolgt typischerweise eine Umlenkung in eine horizontale Ebene. Der stromaufwärtige Förderer kann dazu Steigungsänderungen enthalten, welche zum Beispiel als Kreisbogenstücke ausgebildet sein können. Insbesondere bei Übergängen zwischen einer Schräglage und einer horizontalen Lage des Förderers ist eine stetige Änderung der Steigung einer abrupten Richtungsänderung zu bevorzugen. Anderseits würden nämlich die Produkte über einen Knick geführt, womit eine Produktestange in mehrere kleinere Produktstangen zerfallen und/oder durch die erhöhte Druckbelastung beim Knick deformiert werden kann. Je nach Produktspezifikation (Gewicht, Form, Grösse etc.) könnte auch durchwegs eine horizontale Förderung verwendet werden, insbesondere wenn sichergestellt werden kann, dass die Produkte auch zum Beispiel bei pulsierender Förderung ineinandergeschoben bleiben.

Um die Produkte schonend und konstruktiv einfach aus einer schiefen Ebene in eine horizontale Ebene umlenken zu können, ist dazu vorzugsweise eine in einer vertikalen Ebene liegende Kurvenführung vorgesehen, d. h. die Produktauflage beschreibt eine Kurve in der vertikalen Ebene. Die Kurve hat dabei vorzugweise die Form eines Kreisbogens respektive Kreisbogenstückes, das heisst sie weist eine konstante Krümmung auf. Das Profil kann nun so ausgebildet sein, dass dessen Drehachse mit dem Kreisbogenmittelpunkt zusammenfällt. Die Kurvenführung ist bevorzugt so ausgebildet, dass das Profil von unten in diese eingreifen kann. Dazu weist die Kurvenführung zum Beispiel Schlitze in Förderrichtung auf oder ist aus entsprechend gebogenen Stangen realisiert, wobei das Profil zwischen den Stangen eingreifen kann. Auf Verbindungen zwischen den Stangen im Bereich des Eingriffs des Profils quer zur Förderrichtung wird dabei vorzugsweise verzichtet.

Nachdem Produkte durch den Gasstrom getrennt wurden, greift das Trennmesser in die gebildete Lücke ein und verschiebt die getrennten Produkte in Förderrichtung. Das Profil rotiert nun um dessen Drehachse, bis es in eine Förderbahn der Produkte eingreift. Der Eingriff des Profils erfolgt dabei bezüglich der Förderrichtung hinter den Produkten, womit diese vom Profil erfasst werden. Das Profil wird um dessen Drehachse gedreht und führt damit die Produkte weiter in Förderrichtung, respektive weg von der Trennvorrichtung, insbesondere entlang des Kreisbogenstückes. Kurz nachdem die Produkte das Kreisbogenstück verlassen haben respektive sobald die Produkte hinreichend weit von der Trennvorrichtung entfernt sind. dreht das Profil zurück in die Ausgangslage, womit die nächsten Produkte erfasst und verfahren werden können. Das Profil wird also hin und her geschwenkt. Damit wird eine besonders einfache Konstruktion für eine Vorrichtung erreicht, welche die getrennten Produkte von der Trennvorrichtung abführen kann. Insbesondere wenn das Kreisbogenstück weniger als einen Halbkreis darstellt (was typischerweise der Fall ist) wird damit eine besonders bewegungsarme Vorrichtung geschaffen, welche zudem in ihrer Bewegung wenig Raum beansprucht. Damit wird schliesslich auch eine kompakte Bauweise der Vorrichtung erreicht.

Alternativ kann das Profil nach dem Verlassen des Kreisbogenstückes auch weiter in dieselbe Richtung drehen, womit das Profil den Kontakt zu den Produkten verliert und aus der Förderbahn austritt. Das Profil dreht weiter um die Drehachse, bis es wieder in die Förderbahn eingreift und so nächste getrennte Produkte kontaktieren und verfahren kann. Das Profil kann also in derselben Frequenz, insbesondere gleichmässig, rotiert werden, mit welcher die Trennung der Produkte erfolgt. Damit wird eine besonders einfache Konstruktion erreicht. Weiter können an derselben Drehachse auch mehrere Profile montiert sein, womit mit entsprechend geringerer Frequenz rotiert werden müsste. Diese sind bevorzugt in regelmässigem Abstand zueinander angeordnet (zum Beispiel zwei Profile im Abstand von 180° oder drei Profile im Abstand von 120° etc.). Dabei muss aber beachtet werden, dass eine Sehne zwischen zwei benachbarten Profilen in einem dem Drehpunkt nächstliegenden Kontaktbereich zu den Produkten eine Länge der getrennten Produkte übertrifft, so dass die Profile nicht radial zu den Produkten, sondern hinter den Produkten eingreifen können.

Die Realisierung mit dem rotierenden Profil kann auch bei einer geradlinigen Förderrichtung eingesetzt werden, wobei aber ein Förderweg bezüglich der Profilgrösse (Kontaktbereich zu den Produkten bis zur Drehachse) typischerweise kleiner ist. Bei einer geradlinigen Förderung kann auch eine Linearführung vorgesehen sein, welche Mittel aufweist, welche in die Förderbahn ein und aus der Förderbahn ausgreifen können.

In einer bevorzugten Ausführungsform teilt die Abführvorrichtung die erste Anzahl Bahnen in eine zweite Anzahl Bahnen auf, wobei die erste Anzahl von der zweiten Anzahl verschieden sein kann. Damit wird ein flexibler Einbau der Trennvorrichtung zwischen zwei Verfahrensschritten ermöglicht, insbesondere wenn bei einem ersten Verfahrensschritt vor der Trennung eine erste Anzahl Bahnen erzeugt wird, welche durch den stromaufwärtigen Förderer zur Trenneinrichtung gefördert wird und ein zweiter Verfahrensschritt, welcher in Förderungsrichtung hinter der Trennvorrichtung angeordnet ist, eine zweite Anzahl Bahnen aufnimmt.

Vorzugsweise umfasst die Abführvorrichtung einen Schlitten, welcher insbesondere in vertikaler Richtung verfahrbar ausgebildet ist und zugeführte Produkte in mehrere Bahnen aufteilen kann, wobei getrennte Produkte durch das Profil auf den Schlitten überführbar sind. Die Produkte können in zwei oder mehreren Bahnen dem Schlitten zugeführt werden. Mittels eines rotierbaren Profils können die Bahnen vollständig auf den Schlitten geführt werden. Der Schlitten bewegt sich anschliessend in vertikaler Richtung, um die Produkte einer weiteren Fördereinrichtung und/oder einer Weiterverarbeitung zuführen zu können. Damit können die Produkte in mehreren übereinanderliegenden Bahnen weggeführt werden. Der Schlitten kann natürlich auch horizontal verfahrbar ausgebildet sein, insbesondere horizontal, und quer zur Förderrichtung der Produkte. Damit können die Produkte zu Produktbahnen mit beliebig vielen nebeneinander liegenden Produktbahnen weitergeführt werden. So können zum Beispiel vom stromaufwärtigen Förderer n Bahnen parallel gefördert werden, welche mittels des Schlittens auf m Bahnen erweitert werden. Falls zum Beispiel der Schlitten auch horizontal und rechtwinklig zur Förderrichtung verfahrbar ausgebildet ist kann m auch kleiner als n sein. Eine Wegführung der Produkte vom Schlitten kann dabei mittels Förderbändern oder einer Verschwenkung des Schlittens erfolgen. Bei letzterem würde der Schlitten in Förderrichtung nach unten geneigt, so dass die Produkte durch die Schwerkraft in Förderrichtung rutschen.

Die getrennten Produkte können auch mit anderen Fördermitteln auf den Schlitten geführt werden. Auf die vertikale Verfahrbarkeit des Schlittens kann auch verzichtet werden, insbesondere dann, wenn eine Überführung der getrennten Produkte in mehrere Parallele, entweder übereinander oder nebeneinander liegender Produktbahnen verzichtet werden kann.

Bevorzugt ist die Abführvorrichtung als verfahrbare Greifvorrichtung ausgebildet, womit die Produkte ergriffen, verfahren und abgelegt werden können. Dies ist insbesondere dann von Vorteil, wenn die Produkte verpackt werden müssen oder anderweitig eine beliebig komplexe Bewegung ausführen müssen. Durch eine Greifvorrichtung wird damit eine besonders effiziente Vorrichtung zum Beladen von insbesondere ineinandergeschobenen Produkten erreicht. Eine solche Greifvorrichtung könnte zum Beispiel zwei um eine gemeinsame Längsachse, parallel zu einer Produktförderrichtung angeordneten Schalen der Form eines Kreiszylindermantelstückes mit einem Radius im Bereich eines Produktradius umfassen, welche um die besagte Achse rotierbar gelagert sind und durch eine Rotation mindestens einer Schale die Produkte ergreifen kann. Weiter könnte auch ein Sauggreifer oder eine weitere an sich bekannte Greifeinrichtung eingesetzt werden.

Alternativ kann die Abführvorrichtung auch als Rampe, womit die Produkte aufgrund deren Schwerkraft hinunterrutschen, als Förderband oder als sonstige Fördereinrichtung ausgebildet sein.

Vorzugsweise ist die Trennvorrichtung mit der Greifvorrichtung verbunden. Das Trennmesser kann dabei gleichzeitig die Funktion eines Anschlages bei der Greifvorrichtung übernehmen, so dass die Produkte nach dem Ergreifen zumindest in eine Richtung arretiert sind und sich dadurch in diese Richtung nicht verschieben können. Die Greifeinrichtung weist dazu an einem bezüglich der Förderrichtung hinteren Ende eine Trennvorrichtung auf, welche ein Trennmesser und eine mit dem Trennmesser verbundene Düse umfasst. Das Trennmesser kann dabei bezüglich der Förderrichtung rechtwinklig verfahrbar sein. Die Vergrösserung der Lücke kann durch ein Verfahren der gesamten Greifvorrichtung erreicht werden. Damit kann die Vorrichtung durch weniger bewegte Teile ausgebildet sein, womit ein konstruktiv einfacher Aufbau erreicht werden kann. Die Greifvorrichtung umfasst so nämlich im Wesentlichen alle zum Trennen und Wegtransportieren notwendigen Teile. Der stromaufwärtige Förderer kann damit besonders einfach ausgebildet sein, insbesondere wenn die Produkte entgegen einer Steigung gefördert werden und damit die Produkte ineinandergeschoben bleiben. Weiter kann dadurch unter Umständen ein Ablauf des Trennens und Wegführens der Produkte mit höherer Frequenz durchgeführt werden, womit Zeit und Kosten eingespart werden können.

Die Greifvorrichtung wird dazu über die zu trennenden Produkte geführt. Mittels des Gasstromes werden die Produkte getrennt, worauf die Greifvorrichtung mit dem Trennmesser nach unten, in Richtung der Produkte geführt wird, worauf das Trennmesser zwischen die getrennten Produkte eingeführt wird. Die Greifvorrichtung kann nun soweit in Förderrichtung bewegt werden, dass die Produkte hinreichend getrennt sind. Getrennte, ineinander stapelbare Produkte dürfen bei einer radialen Bewegung die restlichen Produkte nicht kontaktieren, das heisst, der durch die Trennung erreichte Abstand muss mindestens im Bereich einer Produktlänge liegen. Schliesslich kann die Greifvorrichtung die Produkte ergreifen und für eine Weiterverarbeitung oder eine Verpackung abgeführt werden.

Die Trennvorrichtung kann weiter mit einer Zählvorrichtung gekoppelt sein, welche sicherstellt, dass eine bestimmte Anzahl Produkte getrennt wird. Auf die Zählvorrichtung kann gegebenenfalls auch verzichtet werden, insbesondere wenn die Produkte auf dem stromaufwärtigen Förderer entgegen einer Steigung gefördert werden, womit insbesondere stapelbare Produkte bei geeigneter Steigung ineinandergeschoben bleiben.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a bis 1c: schematische Darstellungen eines Trennmessers;
- Fig. 2a bis 2e: schematische Darstellungen einer Düse;
- Fig. 3: eine schematische Darstellung einer Trennvorrichtung;
- Fig. 4a bis 4e: eine schematische Darstellung eines Ablaufs einer Trennung von Produkten; und
- Fig. 5: eine schematische Darstellung einer Welle bei der Trennvorrichtung.

Grundsätzlich sind in den Figuren gleiche Teile mit gleichen Bezugszeichen versehen.

### Wege zur Ausführung der Erfindung

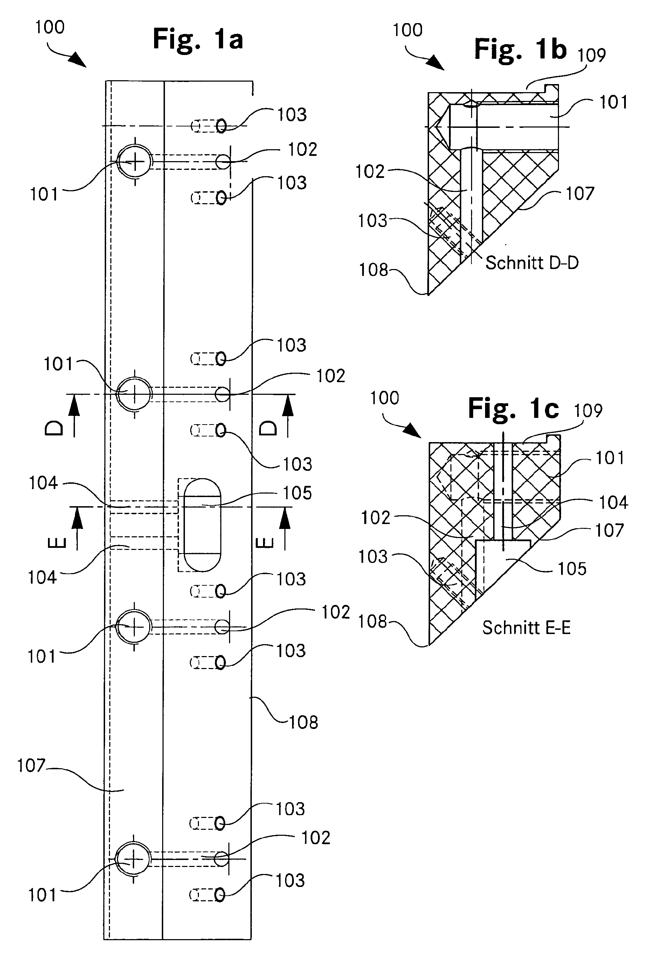

Die Figuren 1a bis 1c zeigen schematische Darstellungen eines Trennmessers 100, geeignet für eine erfindungsgemässe Trennvorrichtung.

Die Figur 1a zeigt eine Draufsicht auf das Trennmesser 100. Die Figur 1b zeigt einen Schnitt entlang der Linie D-D des Trennmessers 100 gemäss Figur 1a. Der Querschnitt des Trennmessers weist im Wesentlichen die Form eines Trapezes mit zwei rechten Winkeln auf. Die beiden weiteren Winkel des Trapezes betragen in der vorliegenden Ausführungsform 45°, respektive 135°. Der 45°-Winkel definiert dabei die Arbeitskante 108 des Trennmessers 100. Das Trennmesser 100 kann als gerades Prisma mit zwei deckungsgleichen obig beschriebenen Trapezen angesehen werden. Zwischen dem 45°-Winkel, respektive der Arbeitskante 108 und dem 135°-Winkel ist die Trennmesserflanke 107. Eine Montagefläche 109 liegt jeweils rechtwinklig zu den beiden parallelen Seiten des Trapezes.

Weiter ist in der Figur 1b eine Gaszufuhrbohrung 101 und eine Gasauslassbohrung 102 ersichtlich. Die Gaszufuhrbohrung 101 ist rechtwinklig zur Gasauslassbohrung 102 orientiert. Die Gaszufuhrbohrung 101 hat einen grösseren Durchmesser als die Gasauslassbohrung 102. Typischerweise ist die Gaszufuhrbohrung 101 so beschaffen, dass zum Beispiel über ein Innengewinde ein Normanschluss verwendet werden kann (nicht dargestellt).

Senkrecht zur Trennmesserflanke 107 sind weitere Bohrungen 103 für Düsenhalteschrauben vorgesehen. Diese sind jeweils paarweise in regelmässigem Abstand bezüglich einer Längsrichtung des Trennmessers 100 zu den Gasauslassbohrungen 102 angeordnet.

Die Figur 1c zeigt einen Schnitt durch das Trennmesser 100 gemäss Figur 1a entlang der Ebene E-E. Dabei ist eine der beiden Bohrungen 104 für die Trennmesserhalteschrauben ersichtlich, welche parallel zu den beiden parallelen Seiten des Trapezes und rechtwinklig zur Montagefläche 109 des Trennmessers verlaufen. Im Bereich der Trennmesserflanke 107 ist eine Ausnehmung 105 für den Schraubenkopf vorgesehen. Die Ausnehmung 105 ist hier so dimensioniert, dass zwei Schraubenköpfe der Trennmesserhalteschrauben (nicht dargestellt) bezüglich der Trennmesserflanke 107 versenkt werden können.

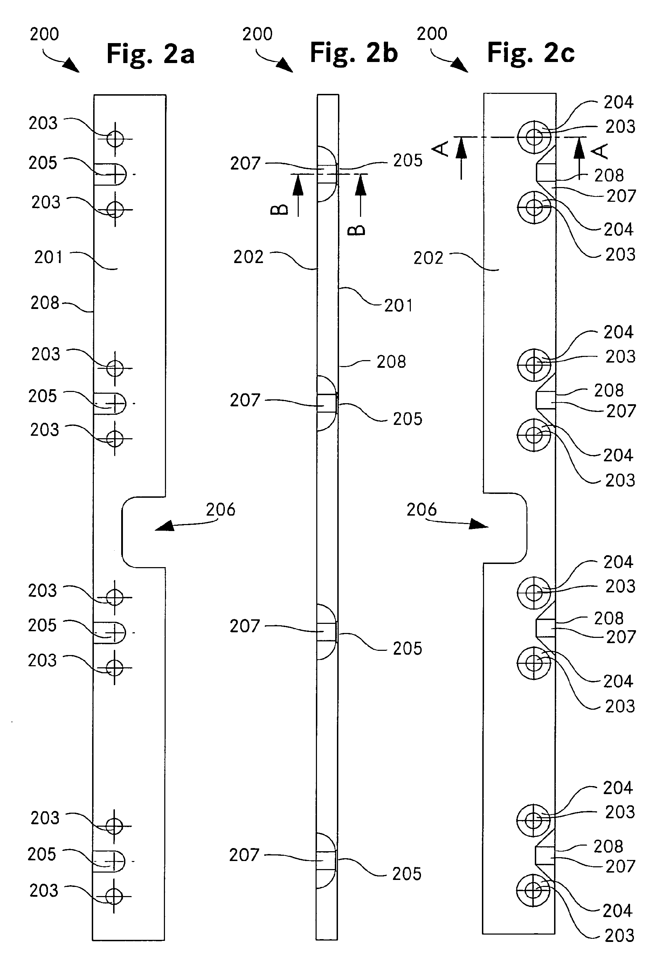

Die Figuren 2a bis 2e zeigen schematische Darstellungen einer für die erfindungsgemässe Trennvorrichtung geeigneten Düse 200.

Das vorliegende Ausführungsbeispiel einer Düse 200 wei st im Wesentlichen die Form eines länglichen Quaders auf und umfasst vier Gasaustrittsstellen, ausgebildet als Düsenausnehmungen 205. Die Düse weist eine erste Hauptfläche 201 und eine parallele zweite Hauptfläche 202 auf. Die eine in Längsrichtung der Düse 200 verlaufende und die erste Hauptfläche 202 begrenzende Kante bildet die Düsenkante 208.

Die Figur 2a zeigt eine Draufsicht auf eine erste Hauptfläche 201 einer Düse 200. Auf der ersten Hauptfläche 201 der Düse 200 sind in regelmässigem Abstand vier Düsenausnehmungen 205 vorgesehen, wobei die Anzahl Düsenausnehmungen 205 für die Realisierung einer erfindungsgemässen Trennvorrichtung nicht relevant ist. Es können nämlich auch mehr, weniger oder insbesondere genau eine Düsenausnehmung 205 vorgesehen sein, wobei damit sowohl die Düsenlänge wie auch die Trennmesserlänge angepasst sein können. Die Düsenausnehmungen 205 sind dabei U-förmig und mit der Öffnung hin zur Düsenkante 208 ausgerichtet und weisen eine konstante Tiefe bezüglich der ersten Hauptfläche 201 der Düse 200 auf. Die Rundung der U-Form der Düsenausnehmung 205 ist dabei als Halbkreis ausgebildet, welche im Wesentlichen der Form des Austrittes der Gasauslassbohrung 102 aus der Trennmesserflanke 107 entspricht. Bezüglich einer Längsrichtung der Düse 200 sind jeweils vor und hinter den Düsenausnehmungen 205 Bohrungen 203 für Düsenhalteschrauben vorgesehen. Weiter ist in der Figur 2a ein Ausschnitt 206 für die Trennmesserhalteschrauben dargestellt. Dieser ist bezüglich einer Längsrichtung der Düse 200 mittig und auf der der Düsenkante 208 gegenüberliegenden Seite angeordnet.

Die Figur 2c zeigt eine Draufsicht auf die zweite Hauptfläche 202 der Düse 200. Auf der zweiten Hauptfläche 202 der Düse 200 sind für die Düsenhalteschrauben im Bereich der Bohrungen 203 für die Düsenhalteschrauben Senken 204 vorgesehen, so dass die Schraubenköpfe der Düsenhalteschrauben bezüglich der zweiten Hauptfläche 202 der Düse versenkbar sind. Weiter ist in der Figur 2c eine im Wesentlichen keilförmige Ausnehmung 207 ersichtlich. Diese weist bezüglich der zweiten Hauptfläche 202 der Düse 200 die Form eines gleichschenkligen, symmetrischen Trapezes auf. In der Figur 2b ist eine Draufsicht parallel zu den Hauptflächen 201, 202 und rechtwinklig zur Düsenkante 208 dargestellt, wobei die Düsenausnehmungen 205 im Bereich der Düsenkante 208 ersichtlich sind. Des Weiteren zeigt die Figur 2b die Form der keilförmigen Ausnehmung 207. Diese ist U-förmig, insbesondere aus zwei Viertelkreisen und einem die beiden Viertelkreisen verbindenden geradlinigen Abschnitt gebildet. Der geradlinige Abschnitt hat eine Länge, welche der kürzeren der parallelen Seiten des obig erwähnten Trapezes entspricht. Die keilförmige Ausnehmung hat die Form zweier Viertelkreiskegel, welche spiegelsymmetrisch beabstandet angeordnet sind, wobei die Spitzen, die beiden zueinander fluchtenden Kanten sowie die Enden der Viertelkreise paarweise miteinander verbunden sind. Durch die keilförmige Ausnehmung 207 können unerwünschte Verwirbelungen im Bereich der Düsenkante 208 vermindert werden.

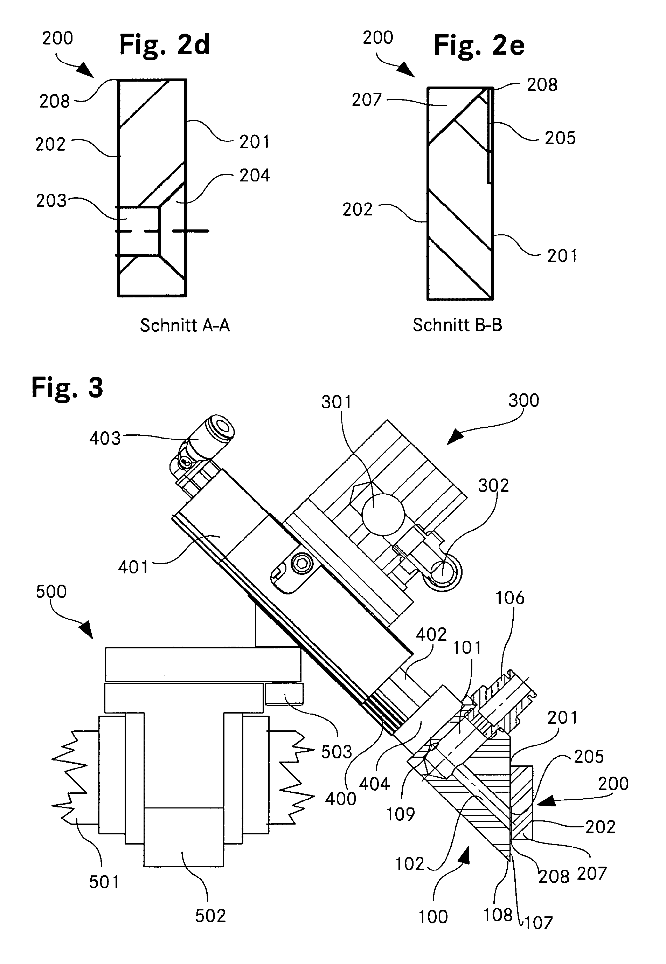

Die Figur 2d zeigt einen Schnitt entlang der Ebene A-A der Figur 2c der Düse 200, wobei insbesondere eine Bohrung 203 für die Düsenhalteschraube und die Senke 204 für den Kopf der Düsenhalteschraube ersichtlich ist. Die Figur 2e zeigt einen Querschnitt entlang der Ebene B-B der Figur 2b. Dabei sind die keilförmige Ausnehmung 207 sowie die Düsenausnehmung 205 ersichtlich.

Die Figur 3 zeigt eine mögliche Ausführung einer erfindungsgemässen Trennvorrichtung. Das Trennmesser 100 ist über die Montagefläche 109 mit einem Zwischenstück 404 verbunden, welches wiederum mit einer Zylinderstange 402 eines Pneumatikzylinders 401 verbunden ist. Die Zylinderstange 402 ist dabei rechtwinklig zur Montagefläche 109 orientiert und weiter im Pneumatikzylinder 401 verfahrbar gelagert, wobei der Pneumatikzylinder über einen Anschluss 403 mit Druckluft betreibbar ist. Der Laufwagen ist rechtwinklig zur Montagefläche 18 auf einer Linearführung 400 verfahrbar gelagert. Mittels des Pneumatikzylinders 401 kann nun das Trennmesser 100 verfahren werden. Der Laufwagen umfasst weiter einen Verteiler 300 zur Verteilung eines Gasflusses zu den Gaszufuhrbohrungen 101. Dazu umfasst der Verteiler 300 einen Hauptanschluss 301 für das Gas, sowie mehrere, insbesondere genau vier, Anschlussstücke 302, welche mit dem Hauptanschluss 301 kommunizieren. In der Figur 3 ist aus perspektivischen Gründen nur ein solches Anschlussstück 302 ersichtlich. Die Anschlussstücke 302 sind jeweils über Leitungen (nicht dargestellt) mit Anschlussstücken 106 verbunden, wobei die Anschlussstücke 106 in die Gaszufuhrbohrungen 101 des Trennmessers 100 eingeschraubt sind (auch davon ist in der Figur 3 aus perspektivischen Gründen nur eines, respektive eine ersichtlich).

Die Düse 200 kontaktiert mit einer ersten Hauptfläche 201 die Trennmesserflanke 107 des Trennmessers 100 und ist über Bohrungen 203 der Düse 200 und Bohrungen 103 des Trennmessers 100 mit Düsenhalteschrauben (nicht dargestellt) mit dem Trennmesser 100 fest verbunden. Die Schrauben sind dazu jeweils paarweise in regelmässigem Abstand zu den Gasauslassbohrungen 102 angeordnet, so dass das Trennmesser 100 und die Düsen 200 dicht schliessen. Die Düsenhalteschrauben sind dazu nahe an den Düsenausnehmungen 205 angeordnet. Die U-förmigen Düsenausnehmungen 205 der Düse 200 liegen dabei bezüglich einer Längsrichtung des Trennmessers 100 exakt über den Gasauslassbohrungen 102 des Trennmessers 100.

Ein Gasstrom wird also mittels einer nicht dargestellten Verbindung in den Hauptanschluss 301 geleitet, worauf er auf die Anschlussstücke 302 und von dort über die nicht dargestellten Leitungen zu den Anschlussstücken 106 des Trennmessers 100 geleitet wird. Vom Anschlussstück 106 des Trennmessers 100 wird der Gasstrom durch die Gaszufuhrbohrung 101 und die Gasauslassbohrung 102 zwischen die Düsenausnehmung 205 und die Trennmesserflanke 107 geführt. Der Gasstrom wird so über einen Bereich der Trennmesserflanke 107 hin zur Arbeitskante 108 geleitet. So kann der Gasstrom über das Trennmesser 100 ausgerichtet werden.

Weiter zeigt die Figur 3 schematisch eine Linearführung 500 an sich bekannter Art. Diese umfasst einen Laufwagen 502, welcher auf einer Schiene 501 verfahrbar gelagert ist. Der Antrieb erfolgt auch hier pneumatisch. Dies hat den Vorteil, dass die gesamte Trennvorrichtung als Energiequelle lediglich zum Beispiel Pressluft benötigt. Der Pneumatikzylinder 401 ist über ein Verbindungselement 503 (zum Beispiel Schrauben) mit der Linearführung 500 verbunden. Die Trennvorrichtung umfasst bevorzugt mindestens zwei Linearführungen 500, welche parallel und bezüglich des Trennmessers 100 ausserhalb desselben verlaufen, so dass die Verfahrung des Trennmessers 100 über die Linearführung 400 und den Pneumatikzylinder 401 gewissermassen zwischen den Linearführungen 500 erfolgt. Gegebenenfalls reicht es aus, wenn nur eine Linearführung 500 angetrieben ist.

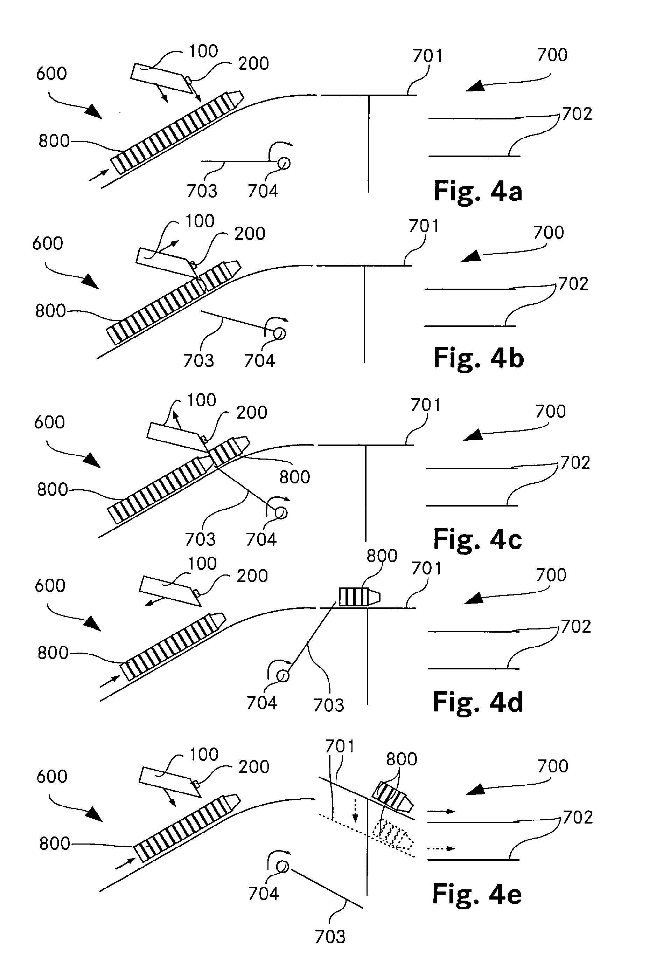

Die Figuren 4a bis 4e zeigen eine schematische Darstellung eines Ablaufs einer Trennung. Die Figuren zeigen eine Seitenansicht der Vorrichtung, wodurch die weiteren Produktbahnen dahinter nicht ersichtlich sind. Die Figuren zeigen einen stromaufwärtigen Förderer 600, welcher als schiefe Ebene ausgebildet ist, entgegen derer Produkte 800 hinaufgefördert werden. Die Förderung der Produkte 800 erfolgt, indem neue Produkte 800 hinten in die Produktstange von Produkten 800 angefügt werden, was in der Figur 4a mit einem Pfeil markiert ist. Weiter ist auf dem stromaufwärtigen Förderer 600 eine Stange von Produkten 800, welche zu trennen ist, ersichtlich. Über der Stange von Produkten 800 ist das Trennmesser 100 ersichtlich, welches mittels zweier Führungen entlang der Förderrichtung des stromaufwärtigen Förderers 600 sowie rechtwinklig dazu verfahrbar ausgebildet ist. Zwecks einer besseren Übersicht sind die Führungen des Trennmessers 100, respektive der Düse 200 nicht dargestellt. Im Folgenden wird unter einer Bewegung des Trennmessers 100 auch die parallele Bewegung der Düse 200 verstanden (da die Düse 200 fix mit dem Trennmesser 100 verbunden ist). Eine Abführvorrichtung 700 umfasst einen in vertikaler Richtung verfahrbaren Schlitten 701 und zwei übereinander angeordnete und dem Schlitten 701 nachgeschaltete Auflagen 702. Zwischen dem Schlitten 701 und dem stromaufwärtigen Förderer 600 ist über eine Drehachse 704 ein Profil 703 angeordnet, welches bei einer Rotation in den stromaufwärtigen Förderer 600 eingreifen, getrennte Produkte 800 erfassen und der Abführvorrichtung 700 zuführen kann (siehe unten).

In der Figur 4a sind die Produkte 800 bereits für die Trennung korrekt positioniert. Das Trennmesser 100 führt eine Bewegung in Richtung der Produkte 800 aus, wobei durch die Düse 200 gemäss der Pfeilrichtung Gas ausströmt und so die Produkte trennt. Der Gasstrom ist dabei aktiv, während das Trennmesser 100 in die gebildete Lücke einfährt.

In der Figur 4b befindet sich das Trennmesser 200 in der durch den Gasstrom gebildeten Lücke zwischen zwei zu trennenden Produkten 800. Anschliessend verfährt das Trennmesser 200 in Förderrichtung der Produkte 800 (gemäss dem Pfeil), um die durch eine Lücke beabstandeten Produkte 800 von den restlichen weiter zu entfernen.

Die Figur 4c zeigt die Produkte 800 in durch das Trennmesser 100 soweit getrennter Anordnung, dass das Profil 703 mittels einer Rotation um dessen Drehachse 704 die Produkte 800 erfassen kann. Dazu sind die Drehachse 704 so angeordnet und die Länge des Profils 703 so bemessen, dass das Profil 703 exakt in die durch das Trennmesser 100 vergrösserte Lücke zwischen die Produkte eindringt. Das Profil 703 weist U-förmige Ausnehmungen auf, welche passgenau mit den Produkten, insbesondere mit Auskargungen der Produkte, übereinstimmen. Damit werden die Produkte 800 lediglich an den typischerweise stabileren Auskargungen erfasst, womit Produkte 800 schonend bewegt werden können. Damit wird auch erreicht, dass eine Bauchung des Produktes 800 durch das Profil 703 nicht kontaktiert und damit auch nicht beschädigt wird, insbesondere eine Bauchung eines Produktes 800, welches durch das Profil 703 nicht weggeführt werden soll.

Die getrennten Produkte 800 werden durch das Profil aus der Schräglage auf den Schlitten 701 der Abführvorrichtung 700 überführt (Figur 4d). Der Schlitten 701 kann nun in vertikaler Richtung verfahren werden, um die Produkte 800 einer der beiden Auflagen 702 übergeben zu können. In der vorliegenden Ausführungsform ist der Schlitten 701 kippbar ausgebildet, so dass die Produkte 800 vom Schlitten 701 mittels der Schwerkraft auf eine der Auflagen 702 gleiten können (Figur 4e).

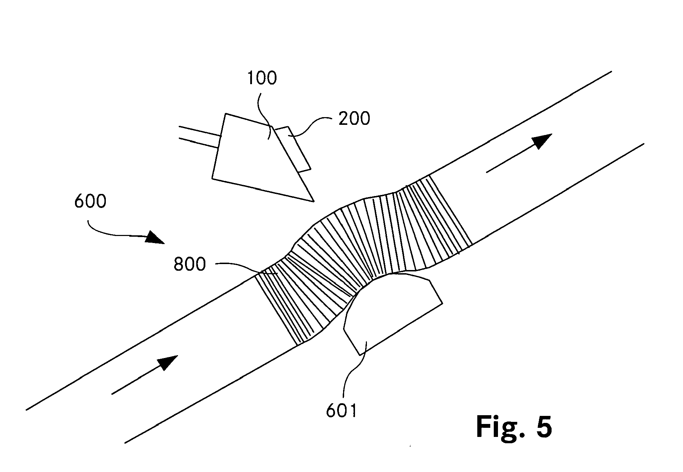

Die Figur 5 zeigt eine Welle 601 im Bereich der Trennvorrichtung, mittels welcher insbesondere stapelbare Produkte leichter getrennt werden können. Die vom stromaufwärtigen Förderer 600 zugeführten Produkte 800 werden über die Welle 601 geführt, so dass die Produkte 800 an einem oberen Kamm auseinandergespreizt werden. Die Düse 200 und das Trennmesser 100 sind dabei über den Produkten 800 im Bereich der Welle 601 so angeordnet, dass das Gas aus der Düse 200 zwischen die durch die Welle 601 auseinandergespreizten Produkte 800 strömen und zwischen den Produkten die Lücke ausbilden kann. Das Trennmesser 100 verfährt danach in die gebildete Lücke und vergrössert diese. Weitere Verfahrensschritte können zum Beispiel wie obig beschrieben vorgesehen sein.

Die Erfindung ist nicht auf das dargestellte Ausführungsbeispiel beschränkt. Insbesondere lassen sich Details der einzelnen Bauelemente variieren. So können die Winkel sowie der Querschnitt des Trennmessers 100 natürlich auch anders ausgebildet sein. Bevorzugt wird jedoch bei der Arbeitskante 108 ein spitzer Winkel eingeschlossen.

Die Düsenausnehmungen 205 können auch andere als die obig beschriebenen Formungen aufweisen, z. B. können sie Verrundungen im Randbereich und dergleichen aufweisen.

Um eine exaktere Bauweise und damit weniger Turbulenzen beim Gasstrom zu erhalten kann die U-förmige Ausnehmung 205 auch die Form einer halben Ellipse aufweisen, womit ein kantenloser Übergang zwischen der Gasauslassbohrung 102 und der Düsenausnehmung 205 erreicht wird.

Die keilförmige Ausnehmung 207 der Düse 200 kann auch anders ausgebildet sein. Die Form kann zum Beispiel einen ähnlichen Querschnitt wie das Trennmesser 100 aufweisen (rechtwinkliges Trapez). Anderseits kann gegebenenfalls auch auf die keilförmige Ausnehmung 207 verzichtet werden, insbesondere, wenn die Düsendicke gering ist.

Statt einer kippbaren Ausführung des Schlittens 701 kann der Schlitten 701 auch Fördermittel umfassen, wie zum Beispiel Förderbänder oder ähnliches.

Sämtliche beschriebenen Bohrungen können auch anders realisiert werden, was auf die Vorrichtung keinen Einfluss hat. Bohrungen sind aber insbesondere für die meisten Materialien besonders einfach durchzuführen. Alternativ könnte statt der Bohrungen auch eine entsprechende Gussform erstellt, oder eine Fräsung vorgenommen werden. Dem Fachmann ist eine Vielzahl von Verfahren bekannt, um eine Öffnung in einem Werkstück zu realisieren.

Statt Pneumatikzylinder können auch Hydraulikzylinder oder motorisierte Antriebe, zum Beispiel Schrittmotoren vorgesehen sein. Dem Fachmann sind auch weitere Möglichkeiten bekannt, eine Linearführung zu betreiben.

Statt der Welle 601 kann auch eine andere Spreizvorrichtung, zum Beispiel eine Rampe, vorgesehen sein. Gegebenenfalls kann natürlich auf die Spreizvorrichtung auch verzichtet werden.

Zusammenfassend ist festzustellen, dass durch die Erfindung eine Trennvorrichtung geschaffen wird, welche stapelbare Produkte, insbesondere gestapelte Becher, in konstruktiv einfacher, kostengünstiger und Produkt schonender Weise trennen kann.

## Patentansprüche

1. Vorrichtung zum Trennen von gestapelten Produkten (800), insbesondere von gestapelten Behältern, umfassend:
a) einen stromaufwärtigen Förderer (600) zum Fördern von gestapelten Produkten (800) in eine Förderrichtung;
b) eine vom stromaufwärtigen Förderer (600) mit gestapelten Produkten (800) gespiesene Trenneinheit zum Trennen zweier benachbarter Produkte (800) der gestapelten Produkte (800) in Förderrichtung;
c) eine Abführvorrichtung (700) zum Abführen der Produkte (800) von der Trenneinheit;
**dadurch gekennzeichnet, dass** die Trenneinheit Folgendes umfasst:
d) eine Düse (200) zur Erzeugung eines Gasstromes, wobei mittels des Gasstromes eine Lücke zwischen zwei benachbarten Produkten (800) erreichbar ist; und
e) ein Trennmesser (100) zum Vergrössern der Lücke.

2. Vorrichtung nach Anspruch 1, **dadurch gekennzeichnet, dass** die Düse (200) und das Trennmesser (100) relativ zueinander fix angeordnet sind.

3. Vorrichtung nach Anspruch 1 oder 2 , **dadurch gekennzeichnet, dass** das Trennmesser (100) mehrere Düsen (200) umfasst, welche in einer Reihe rechtwinklig zur Förderrichtung angeordnet sind.

4. Vorrichtung nach einem der Ansprüche 1 - 3, **dadurch gekennzeichnet, dass** die Düse (200) an einer Flanke (107) des Trennmessers (100) angeordnet ist.

5. Vorrichtung nach einem der Ansprüche 2 - 4, **dadurch gekennzeichnet, dass** die Düse (200) über einen Kanal im Trennmesser (100) mit Gas versorgbar ist, wobei der Kanal aus der Flanke (107) des Trennmessers (100) durch eine Austrittsöffnung (102) austritt.

6. Vorrichtung nach Anspruch 4 oder 5, **dadurch gekennzeichnet, dass** die Düse (200) eine erste Hauptfläche (201) aufweist, die die Flanke (107) des Trennmessers (100) kontaktiert, wobei die erste Hauptfläche (201) eine Ausnehmung (205) aufweist, welche in Richtung einer Arbeitskante (108) des Trennmessers (100) offen ist und so zusammen mit dem Trennmesser (100) einen Düsenaustritt bildet, und wobei die Austrittsöffnung (102) des Kanals in Kommunikation mit der Ausnehmung (205) steht.

7. Vorrichtung nach Anspruch 6, **dadurch gekennzeichnet, dass** die Düse (200) eine zweite Hauptfläche (202) aufweist, welche parallel zur ersten Hauptfläche (201) orientiert ist, wobei die Düse (200) auf der zweiten Hauptfläche (202) eine keilförmige Ausnehmung (207) aufweist, welche im Düsenaustritt mündet und so eine Düsenkante (208) bildet.

8. Vorrichtung nach einem der Ansprüche 1 - 7, **dadurch gekennzeichnet, dass** die Trennvorrichtung eine erste Führung (500) umfasst, mit welcher das Trennmesser (100) in Förderrichtung, im Wesentlichen parallel zu einer Längsachse des Produktes (800), verfahrbar ist.

9. Vorrichtung nach Anspruch 8, **dadurch gekennzeichnet, dass** die erste Führung (500) als Linearführung (500) ausgebildet und insbesondere pneumatisch betreibbar ist.

10. Vorrichtung nach einem der Ansprüche 1 - 9, **dadurch gekennzeichnet, dass** die Trennvorrichtung eine zweite Führung umfasst, mit welchem das Trennmesser (100) zu den Produkten (800) respektive von den Produkten (800) weg verfahrbar ist.

11. Vorrichtung nach einem der Ansprüche 1 - 10, **dadurch gekennzeichnet, dass** der stromaufwärtige Förderer (600) Halteeinrichtungen umfasst, welche die Produkte (800) in axialer Richtung fixieren.

12. Vorrichtung nach einem der Ansprüche 1 - 11, **dadurch gekennzeichnet, dass** eine Produktauflage des stromaufwärtigen Förderers (600) im Bereich der Trennvorrichtung eine Wellenform oder einen Absatz (601) aufweist.

13. Vorrichtung nach einem der Ansprüche 1 - 12, **dadurch gekennzeichnet, dass** der stromaufwärtige Förderer (600) mit einer Horizontalen einen Winkel α einschliesst, so dass die durch den stromaufwärtigen Förderer (600) geförderten Produkte (800) durch die Schwerkraft mit einer der Förderrichtung entgegen gesetzten Rückstellkraft beaufschlagt sind, wobei die Rückstellkraft eine Reibungskraft zwischen Produkten (800) und der Produktauflage übersteigt.

14. Vorrichtung nach einem der Ansprüche 1 - 13, **dadurch gekennzeichnet, dass** die Abführvorrichtung (700) ein bewegliches Profil (703) umfasst, womit getrennte Produkte (800) erfassbar und verfahrbar sind.

15. Vorrichtung nach Anspruch 14, **dadurch gekennzeichnet, dass** das Profil (703) um eine Achse (704) verschwenkbar und/oder verfahrbar ausgebildet ist.

16. Vorrichtung nach Anspruch 14 oder 15, **dadurch gekennzeichnet, dass** die Abführvorrichtung (700) einen Schlitten (701) umfasst, welcher insbesondere in vertikaler Richtung verfahrbar ausgebildet ist und zugeführte Produkte (800) in mehrere Bahnen aufteilen kann, wobei getrennte Produkte (800) durch das Profil (703) auf den Schlitten überführbar sind.

17. Vorrichtung nach einem der Ansprüche 1 - 16, **dadurch gekennzeichnet, dass** die Abführvorrichtung (700) als verfahrbare Greifvorrichtung ausgebildet ist, durch welche die Produkte (800) ergriffen, verfahren und abgelegt werden können.

18. Vorrichtung nach Anspruch 17, **dadurch gekennzeichnet, dass** die Trennvorrichtung mit der Greifvorrichtung verbunden ist.

19. Verfahren zum Trennen von gestapelten Produkten (800), insbesondere von gestapelten Behältern, umfassend die folgenden Schritte:
a) Zuführen von gestapelten Produkten (800) mittels eines stromaufwärtigen Förderers (600) in Förderrichtung zu einer Trenneinrichtung;
b) Positionieren eines Trennmessers (100) im Bereich zweier benachbarter Produkte (800);
c) Ausbildung einer Lücke zwischen den benachbarten Produkte (800) mittels eines Gasstroms, insbesondere eines über das Trennmesser (100) geleiteten Gasstroms;
d) Einführen des Trennmessers (100) in die Lücke zwischen den zwei benachbarten Produkten (800);
e) Vergrössern der Lücke mittels des Trennmessers (100);
f) Übergabe der getrennten Produkte (800) an eine Abführvorrichtung (700).

20. Verfahren nach Anspruch 19, **dadurch gekennzeichnet, dass** die Produkte (800) mittels des stromaufwärtigen Förderers (600) entgegen einer Steigung aufwärts gefördert werden.

21. Verfahren nach Anspruch 19 oder 20, **dadurch gekennzeichnet, dass** die Produkte (800) mittels des stromaufwärtigen Förderers (600) in einer ersten Anzahl paralleler Bahnen gefördert werden und die Trennung der Produktbahnen zeitgleich erfolgt.

22. Verfahren nach einem der Ansprüche 19 bis 21, **dadurch gekennzeichnet, dass** der Gasstrom während einer Zeitspanne aktiv ist und das Trennmesser (100) innerhalb der Zeitspanne zwischen die benachbarten Produkte (800) eingeführt wird.
